# EUROPEAN PATENT APPLICATION

(11) **EP 1 510 934 A1**
(43) Date of publication of application: **02.03.2005**
(21) Application number: 03019355.1
(22) Date of filing: 27.08.2003
(51) Int. Cl.: G06F 17/30, G06F 17/60

(54) **Inter-host web log reporting**

(71) Applicant: Sony NetServices GmbH, 5081 Anif (AT)
(72) Inventor: Michelitsch, Stefan, 5081 Anif (AT); Nemetz, Thomas, 5081 Anif (AT); Tripp, Markus, 5081 Anif (AT)
(74) Representative: Görz, Ingo

(57) **Abstract**

A method for inter-host web log reporting for a hierarchically ordered number of linked internet pages that are hosted on more than one server comprises the steps of storing log data (S1, S2, S3) in a common format on one dedicated server (6), and re-arranging the log data to a data cube (S4).

## Description

This invention relates to a method for inter-host web log reporting, in particular for a hierarchically ordered number of linked internet pages that are hosted on more than one server.

Due to the wide spread use of the internet the integration of linking among, logging of and reporting about website traffic becomes more and more important. In particular, companies that are organised in several distinct business entities need a reliable tool that enables to evaluate a relationship among the distinct websites of each business entity to create reports for cross-marketing purposes.

In particular, for hierarchically ordered linked internet pages of companies that are divided into distinct business entities which individual pages are cross-linked it is wanted that the internet pages are used by customers as efficient as possible to convey information to customers. The internet has a built-in advantage over other mediums such as advertisements for or descriptions of products, because web-servers can track and log the user's use of web-sites. If the path users move along once they are in the sites of the company can be approximated from the logs of many previous visits, webmasters can redesign the sites to most closely match the paths users are already following. Restructuring a site based on previous user activity will make it easier for users to find what they are looking for and can be used to enable successful cross-marketing.

Redesigning different linked sites in an effective manner depends on three steps. First, the activity of users on the site must be logged. Second, the patterns of the users in the web logs must be identified and third, there must be a method for reconstructing the sites. The first and third steps are done routinely for individual sites. However, the performing of the first and third steps for different linked sites and the second step of identifying patterns, in particular for different interlinked sites, is difficult and often stops companies from reconstructing their sites. Analysing web logs to find patterns is extremely difficult for humans because web logs are text based, they are large, often taking up Megabytes of data, and much of the information is not applicable to find patterns. Further, every server might have its own way of logging the user behaviour on its sites.

Therefore, it is the object underlying the present invention to provide an improved method for reporting on cross website traffic of linked sites stored on separate servers.

This object is solved by a method for inter-host web log reporting as defined in independent claim 1. Preferred embodiments thereof are defined in the respective following sub-claims. A computer program product according to the present invention is defined in claim 9 and a computer readable storage means according to the present invention is defined in claim 10.

Therefore, the method for inter-host web log reporting for a hierarchically ordered number of linked internet pages that are hosted on more than one server according to the present invention comprises the steps of: storing log data in a common format on one dedicated server, and re-arranging the log data to a data cube.

Therefore, the present invention provides a method according to which data from consistent web logs of different servers that are stored in one repository is taken and arranged in a manner that will make recognizing patterns practical. Due to the usage of the data cube concept, different information contents might be easily depicted in a visually attractive form so that human analyzing of the re-arranged data is easy. In this way the visual representation might depict the paths users took to get from one page to the next, the time spent on each page, different browser windows and the category of the site, etc.. Web administrators can determine which information should be logged in the similar format from every server in one common repository so that patterns in web use can be easily identified and the effect of cross-marketing can be enhanced and monitored. Further, changes to the websites on the different servers could be made based on usage patterns in the web logs without the difficult tasks for humans to find the patterns. It can easily be recognized how users use the hierarchically ordered linked internet pages of the company which is organized in distinct business entities, since each of the business entities logs the user behaviour in a common format. These log entries are automatically generated every time a user changes to a different internet page without the necessity of an explicit feedback of the user.

According to the present invention the data cube preferably comprises the dimensions of a time of a log data entry, a referrer stored in said log data entry and a target stored in said log data entry. In this context a referrer is a page from which a user starts to come to a target page in a direct or indirect manner.

In particular, according to the present invention preferably the internet pages hosted on different servers are linked via respective interstitial pages. In this way it is possible to give certain additional information or advertisements to a user, but still lead him or her in a comfortable way to the desired target. It is even possible to provide the possibility of a refined specification of the desired target to the user by offering a selection of targets on the interstitial page that is displayed after selection of a target on the current page, e.g. to link the user not to the main page of a business entity of a big corporation, but to a specific page further down in the hierarchy of that specific business entity, e.g. to a particular product.

In this case the data cube according to the present invention preferably comprises the dimension of the used interstitial page stored in a log data entry.

According to the present invention preferably a controller hosted at the dedicated server transfers the user from the internet page to the interstitial page. In addition to transferring the user to the interstitial page, the controller captures the event of the transfer and stores the information related with the transfer event on the dedicated server.

According to the present invention all interstitial pages are preferably hosted on one server, in particular on the dedicated server for storing the log data. In this case the administration of the cross-marketing among the different distinct business entities of the big company is made particular easy, since the monitoring of the web log reports and the re-directing via the interstitial pages is in the hand of one administrator, namely of the administrator of the dedicated server for storing the log data.

According to the present invention preferably all linked internet pages show a navigation bar, preferably with a cross navigation section, via which a user can be directed from an internet page to a target internet page, e.g. via an interstitial page. In this way an effective and simple tool is given to the different administrators of the respective distinct business entities to connect to the hierarchical structure of the company.

According to the present invention preferably a set of structured data according to the hierarchy of the linked internet pages is stored on the dedicated server for storing the log data upon a user request on the internet page showing the navigation bar.

A computer program product according to the present invention comprises computer program means adapted to perform the method steps as set out above or parts thereof when being executed on a computer, digital signal processor or the like.

A computer readable storage means according to the present invention stores thereon a computer program product as set out above.

For a better understanding of the invention and to further elucidate the invention, its features, objects and advantages, exemplary preferred embodiments thereof are described in detail by way of example while making reference to the accompanying drawings, wherein:
- **Fig. 1**: shows an exemplary hierarchy among corporate websites,
- **Fig. 2**: shows the three basic elements of the method for inter-host web log reporting according to the present invention,
- **Fig. 3**: shows the transfer of a user from an internet page to a target page and the respective storage of log data in a common repository according to the present invention, and
- **Fig. 4**: shows an exemplary data cube structure according to the present invention.

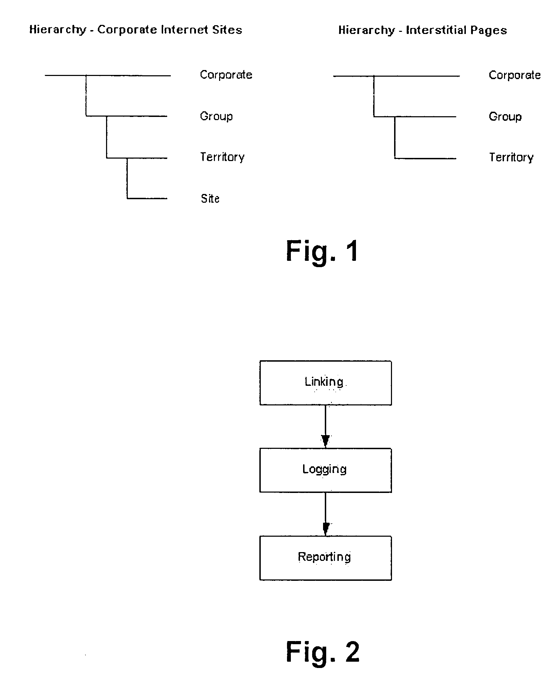

Fig. 1 shows an example for a corporate sites hierarchy of a company like Sony Corporation in Europe that might have one main internet page on the highest level (Corporate) beneath which the pages of the different distinct business entities (Group) are arranged on the group level, which are respectively divided into different territories to finally come to the single sites. On the group level the distinct business entities like Sony Electronics, Sony Music, Sony Pictures, Sony Computer Entertainment, and Sony Ericsson might be arranged which are then divided into different territories like the US, Germany, Great Britain ..., which respectively have one or more sites.

The hierarchy of the interstitial pages obviously shows one level less, since the interstitial pages are respectively arranged between the different hierarchy levels of the corporate sites. Therefore a first interstitial pages hierarchy level of Sony Corporation is arranged between the corporate site hierarchy level of Sony Corporation and its groups, i.e. links the main page to the different distinct business entities. A second interstitial pages hierarchy level, i.e. the group level, links the corporate sites hierarchy group level to the territory level, and the interstitial pages hierarchy territory level, which is the lowest interstitial pages hierarchy level, links the corporate sites hierarchy territory level to the corporate sites hierarchy site level.

Fig. 2 shows the basic elements of the method for inter-host web log reporting according to the present invention, which is the linking, e.g. as shown in Fig. 1, the logging of the user activity, as described in the following, and finally a reporting. Generally, the linking according to the present invention introduces the hierarchical structure of corporate websites, the logging according to the present invention enables a standardized capturing of log-information across corporate websites, i.e. across different servers, to capture data, and the reporting according to the present invention enables the extracting of information on multiple dimensions on the data captured during the logging.

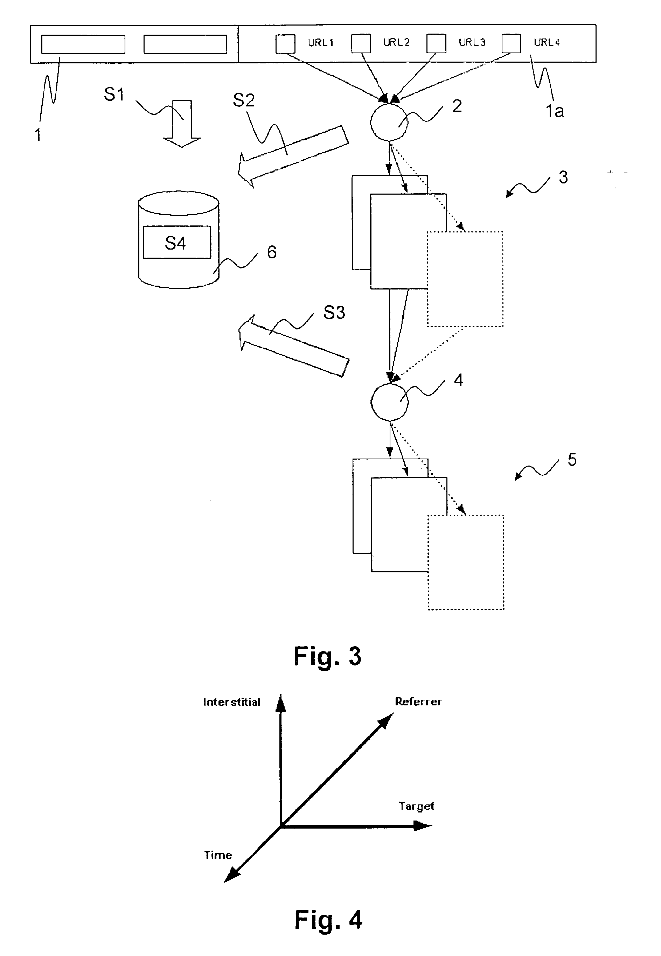

Fig. 3 shows the transfer of a user from a current internet page to a target page 5 and the respective capturing of data. A visitor to any Sony website does view a navigation bar 1 on his/her current internet page. The navigation bar 1 shows a cross-navigation-section 1a that enables to direct the user to a target page by including links to different pages, here indicated as URL1, URL2, URL3, URL4. Once the user makes a request on the page that shows the navigation bar, on the request a set of structured data according to the hierarchy of the sites is captured in a step S1, as exemplarily shown below. This structured data can be regarded as navigation bar impression.

| Data | Description | Example |
|---|---|---|
| group | Name (ID) of Sony Group Company | Sony Music |
| territory | Name (ID) of territory Sony Group is operating in | Austria |
| site | Name (ID) of site | http://www.sonymusic.at/ |
| randomizer | Random number to distinguish requests | 1243324234 |

Example
http://domain.com/path/image.ext?group=SonyMusic&territory=Austria&site=
http://www.sonymusic.at/&randomizer=1243324234

A transfer from the current page to a target page via the cross-navigation section 1a of the navigation bar 1 is enabled in 2 stages, namely from the navigation bar via a first controller 2 to an interstitial page 3, and from an interstitial page 3 via a second controller 4 to a target page 5.

During the transfer the first controller 2 captures log data in a step S2, as exemplarily shown below:

| Data | Description | Example |
|---|---|---|
| group | Name (ID) of Sony Group Company | Sony Music |
| territory | Name (ID) of territory Sony Group is operating in | Austria |
| site | Name (ID) of site | http://www.sonymusic.at/ |
| destination | Name (ID) of Sony Group where user is directed to | Sony Electronics |
| randomizer | Random number to distinguish requests | 1243324234 |

Example
http://domain.com/path/navredirect.jsp?group=SonyMusic&territory=Austria&site=http://ww
w.sonymusic.at/&destination=SonyElectronics&randomizer=1243324234
and the second controller 4 captures data in a third step S3 as exemplarily shown in the following:

| Data | Description | Example |
|---|---|---|
| group | Name (ID) of Sony Group Company | Sony Music |
| territory | Name (ID) of territory Sony Group is operating in | Austria |
| site | Name (ID) of site | www.sony.at |
| destination | Name (ID) of target site | http://www.kuschelrock.at/ |
| randomizer | Random number to distinguish requests | 1243924234 |

Example
http://domain.com/path/intredirect.jsp?group=SonyMusic&territory=Austria&destination=http:/
/www.kuschelrock.at/&randomizer=1243924234

The data captured in the first two third step S1 to S3 is stored in a single repository 6, i.e. on one dedicated server.

The data format is exemplarily shown below:
"%h %1 %u %t \"%r\" %>s %b \ "%{Referer}i\" \"%{User-agent}i\""

| **Format** | **Description** | **Example** |
|---|---|---|
| %h | Remote Host | 192.168.1.244 |
| %1 | Remote Logname | |
| %u | Remote User | |
| %t | Timestamp | [17/Jan/2003:09:02:30 +0100]) |
| %r | First line of request | GET /e-shop /minisite/clie_tour/en/index.shtml HTTP/1.1 |
| %s | Status | 200 |
| %b | Bytes sent, excluding HTTP headers | 807 |
| %{Referrer} | Referer, (problems at Sony Cyber Space) | |
| %{User-agent} | User Agent | Mozilla/4.0 (compatible; MSIE 5.01; Windows NT 5.0; Interfree SpA |

An example would be that Sony Music promotes a product, e.g.

Kuschelrock CD, in Austria via its internet pages. For such a promotion a navigation bar 1 is created and the links in the cross-navigation section 1a on this page link to other Sony groups in Austria, e.g. Sony Electronics Austria, Sony Ericsson Austria.

For reporting, the log data on the dedicated server, i.e. in the common repository 6, is re-arranged to a data cube in a fourth step S4, e.g. in the dimensions of time, referrer, interstitial, and target.

Such an exemplary data cube is shown in Fig. 4. Here time means the time of recording the log data, referrer refers to the page on which the navigation bar 1 is incorporated, target refers to the target page 5 selected on an interstitial page 3 that is displayed after selection of one of the URLS displayed in the cross-navigation section 1a of the navigation bar 1, to which interstitial page the reporting dimension interstitial refers.

An example report could then display the following entries:
Target: Kuschelrock Austria (http://www.kuschelrock.at/)
Time Period: July 2003

| | Number of Visitors |
|---|---|
| Total | 250.000 |
| - Sony Music | 40.000 |
| - Austria | 1.000 |
| - Germany | 5.000 |
| - ... | ... |
| - Sony Electronics | 60.000 |
| ... | ... |

## Claims

1. Method for inter-host web log reporting for a hierarchically ordered number of linked internet pages that are hosted on more than one server, comprising the steps of:
- storing log data (S1, S2, S3) in a common format on one dedicated server (6), and
- re-arranging the log data to a data cube (S4).

2. Method according to claim 1, **characterized in that** the data cube comprises the dimensions of a time of a log data entry, a referrer stored in said log data entry, and a target stored in said log data entry.

3. Method according to claim 1 or 2, **characterized in that** the internet pages hosted on different servers are linked via respective interstitial pages (3).

4. Method according to claim 3, **characterized in that** the data cube comprises the dimension of a used interstitial page stored in a log data entry.

5. Method according to claim 3 or 4, **characterized in that** a controller (2) hosted at the dedicated server (6) transfers the user from the internet page to the interstitial page (3) and captures the event of the transfer and stores the information related with the transfer event on the dedicated server (6) (S2).

6. Method according to anyone of the preceding claims 3 to 5, **characterized in that** all interstitial pages (3) are hosted on one server, in particular the dedicated server (6) for storing the log data.

7. Method according to anyone of the preceding claims, **characterized in that** all linked internet pages show a navigation bar (1), preferably with a cross navigation section (1a), via which a user can be directed from an internet page to a target internet page (5).

8. Method according to claim 7, **characterized in that** upon a user request on the internet page showing the navigation bar a set of structured data according to the hierarchy of the linked internet pages is stored on the dedicated server (6) for storing the log data (S1).

9. Computer program product, comprising computer program means adapted to perform the method steps as defined in anyone of claims 1 to 8 when being executed on a computer, digital signal processor or the like.

10. Computer readable storage means, storing thereon a computer program product according to claim 9.
